# EUROPEAN PATENT APPLICATION

(11) **EP 1 315 269 A1**
(43) Date of publication of application: **28.05.2003**
(21) Application number: 02023498.5
(22) Date of filing: 22.10.2002
(51) Int. Cl.: H02K 1/18, H02K 5/22, H02K 5/26

(54) **A system for fastening the stator to the casing in a rotating electrical machine**

(30) Priority: 26.11.2001 IT VI20010247
(71) Applicant: Sincro S.R.L., 36073 Cornedo Vicentino (Vicenza) (IT)
(72) Inventor: Lino, Soga, 36075 Montecchio Maggiore (Vicenza) (IT)
(74) Representative: Bettello, Pietro, Dott. Ing.

(57) **Abstract**

The system of fastening the stator to the casing in a rotating electrical machine provides the use of rods (8) which are axially disposed and are inserted within slots (9). These slots are formed on the peripheral surface of the stator (2). The rods are provided on their upper surface with threaded openings (12) on which are screwed screws (10) from the exterior and through openings (11) formed on the casing.

## Description

### Field of The Invention

This invention relates to a system for fastening the stator to the casing in a rotating electrical machine.

### Background of The Prior Art

In the types of machines which transform their mechanical energy of rotation into electrical energy and vice versa, such as by way of example single phase or three phase synchronous generators, in which the stator is applied on the external casing, this casing is provided, in its two frontal sides, respectively, with the rear shield and the front flange for coupling with the moving member.

In addition the casing is provided with support feet, a terminal board socket and other accessories.

At the present state of the art, a first system of fastening the stator to the casing consists of inserting the stator in the interior of the casing which has been previously heated so that, since a coupling is foreseen due to interference between the stator and the casing, due to cooling a reciprocal fastening is obtained.

Other systems of fastening the stator and the casing provide the use of welding or other mechanical°means of connection.

Afterwards, the shield and the coupling flange are mounted to the monoblock stator/casing on suitable rabbets formed on the two ends of the casing.

Normally, the small support feet, the terminal board housing and the other accessories form a single body with the casing because they are welded on it.

### Summary of The Invention

An object of the present invention is to provide a system of fastening the stator to the casing which is novel with respect to similar products of known type.

A further object of the invention is to provide a rotating electrical machine in which the main components are not reciprocally movable.

A further object of the invention is to provide a rotating electrical machine in which the small support feet and the terminal board are anchored to the casing in different positions without the necessity of modifying the casing.

These objects are achieved by providing that the fastening of the stator to the casing is obtained by the use of metallic rods axially disposed on the stator which are inserted within slots formed longitudinally on the lateral surface which is external or on the peripheral surface of the stator.

The block comprising the stator and the longitudinal rods is inserted in the casing and blocked by means of screws which are inserted from the exterior and screwed into corresponding threaded openings formed in the rods, obviously after going through corresponding openings made in the casing.

The invention is completed by providing that on the two ends or extremities of each rod are present threaded openings which allow the screwing of screws which fasten respectively the shield, the coupling flange and other components to the ends of the casing.

### Brief Description of The Drawings

The invention will be better understood from the description of a possible embodiment provided as a nonlimiting example by reference to the attached drawings, in which:
Fig. 1 is an exploded perspective view of the synchronous generator utilizing the system of the invention;
Fig. 2 is a cross sectional elevational front view of the synchronous generator of Fig. 1;
Fig. 3 a side cross sectional view taken along line III-III of Fig. 2.

### Detailed Description of The Invention

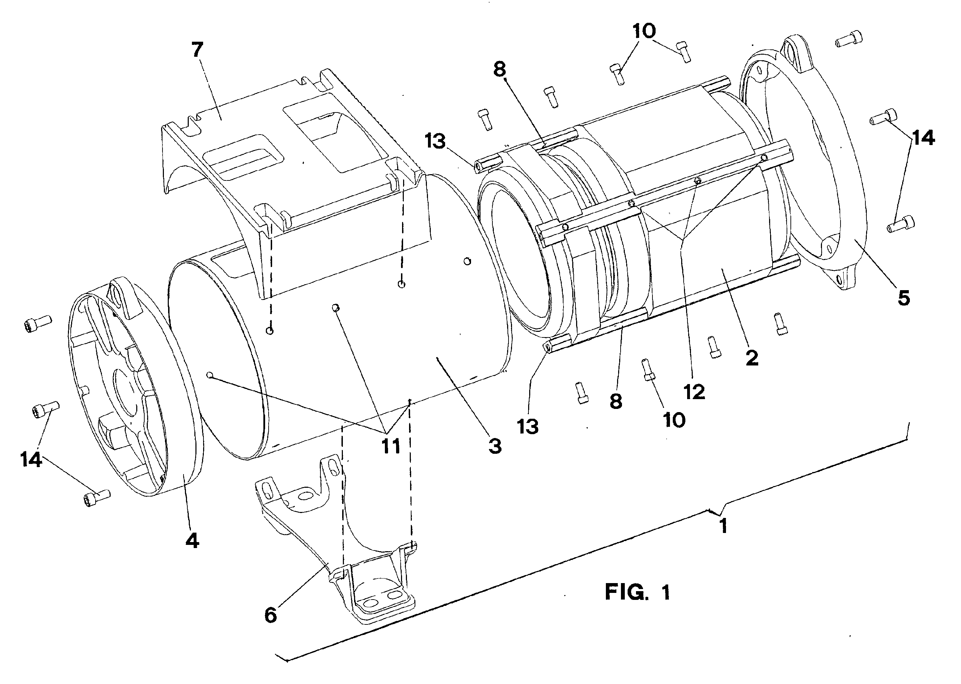

As shown in Fig. 1, the rotating electrical machine, specifically a synchronous generator indicated overall with the number (1), is composed by stator (2) which is inserted in the interior of the casing (3), this casing being closed on the two sides, respectively, by the shield (4) and by the coupling flange (5) and on which are present the small feet (6) and the terminal board (7).

On the stator (2) are applied rods (8) axially inserted within slots (9) formed on the peripheral surface of the stator.

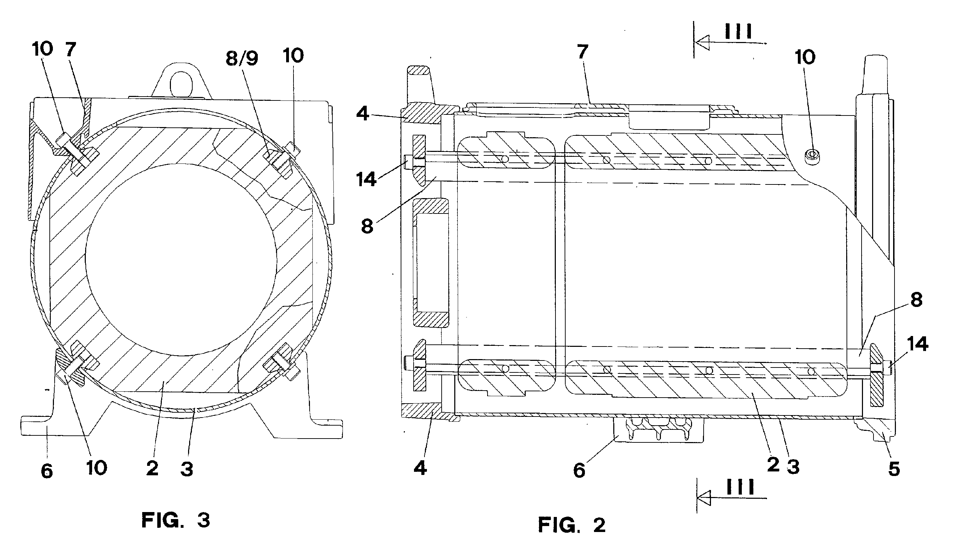

As shown in Figs. 2 and 3, the fastening of the stator (2) to casing (3) is obtained by means of screws (10) which, from the exterior, pass through openings (11) formed on the casing, and are threaded into openings (12) formed on the upper part of rods (8).

In addition, as shown in Figs. 1 and 2 on the two ends of each rod (8) are present threaded openings (13) which allow the screwing of screws (14) on the end, so that the shield (4) and the coupling flange (5) are fastened on casing (3).

In addition, with the constructive solution of the present invention it is possible to anchor the small support feet (6), and the terminal board (7) on the casing (3) in different positions simply by forming longitudinal templates so that it is possible to utilize the same screws (10) which fix also the stator (2) to the casing (3), as shown in Fig. 3.

Finally, the invention provides that the screws (10) and (14) be of the same type and dimension so as to reduce the number of different components which form the synchronous generator.

On the basis of what has been described hereinabove the advantages, both constructively and in operation, are evident resulting from the use of the rotating electrical machine of the invention. In particular the simplicity of mounting and substitution of the parts one by one make possible with the same screws to fix to the casing the support feet, and the terminal board so that they may be eliminated or moved according to the service requirements of the machine.

## Claims

1. A system of fastening the stator to the casing in a rotating electrical machine such as a synchronous generator which comprises a stator (2) which is inserted in the interior of a casing (3), said casing being closed on two sides respectively by a shield (4) and a coupling flange (5), and support feet (6) and a terminal board (7) and other accessories present on said casing, said system of fastening the stator to the casing being **characterized by** the fact that it comprises rods (8) axially disposed and inserted within slots (9) formed on the peripheral surface of said stator (2), said rods (8) being provided on their upper surface with threaded openings (12), screws (10) screwing from the exterior and through openings (11) formed on the casing (3), whereby fastening of said stator (2) and said casing (3) is obtained.

2. The system of fastening according to claim 1 **characterized by** the fact that the two ends of each rod (8) have threaded openings (13) which allow the screwing of screws (14) on the end, said screws (14) fastening on the casing (3) respectively said shield (4) and said coupling flange (5).

3. The system of fastening according to claim 1 **characterized by** the fact that on at least one of the two ends of each rod (8) is present a threaded opening (13) which allows the screwing of screws (14) on the end whereby the shield (4) or the coupling flange (5) are blocked on the casing (3).

4. The system of fastening according to claim 1 **characterized by** the fact that the same screws (10) which fix the stator (2) to the casing (3) at the same time may be used also for fixing the support feet (6) and/or the terminal board (7) on the casing (3).

5. The system of fastening according to claim 1 **characterized by** the fact that it provides for anchoring the feet (6) and terminal board (7) and other accessories in different positions on the casing (3) simply by forming in them templates of openings which are congruous with openings (11) formed in the casing.

6. The system of fastening according to claim 3 **characterized by** the fact that screws (10) for fixing the stator to the casing and screws (14) for fastening the shield and the coupling flange on the casing are of the same type and dimensions.
